# EUROPEAN PATENT SPECIFICATION

(11) **EP 1 269 842 B1**
(45) Date of publication and mention of the grant of the patent: **20.10.2004**
(21) Application number: 01114940.8
(22) Date of filing: 20.06.2001
(51) Int. Cl.: A01N 25/00

(54) **Method for controlling the application of an insecticide and composition therefor**
Verfahren zur Kontrolle von Insektizidapplikation sowie Zusammensetzung dafür
Méthode de contrôle de l'application d'un insecticide et composition pour cela

(43) Date of publication of application: 02.01.2003
(73) Proprietor: Flit S.A., 1204 Geneva (CH)
(72) Inventor: Mohamed Mahgoub, Hisham, Al Sayeda Zaynab (EG); Ahmed Mahmoud Fahmy, Amina, Garden City Cairo (EG)
(74) Representative: Curley, Donnacha John

(56) References cited:
- EP-A- 0 130 675
- GB-A- 2 187 387
- DATABASE WPI Week 198109 Derwent Publications Ltd., London, GB; AN 1981-14620D XP002189023 & JP 55 164601 A (EIKODO KK, SANBUREN KK), 22 December 1980 (1980-12-22)
- DATABASE WPI Week 198518 Derwent Publications Ltd., London, GB; AN 1985-107354 XP002189024 & JP 60 051101 A (TOPPAN PRINTING CO LTD), 22 March 1985 (1985-03-22)
- DATABASE WPI Week 198148 Derwent Publications Ltd., London, GB; AN 1981-88042D XP002189025 & JP 56 131684 A (EARTH SEIYAKU KK), 15 October 1981 (1981-10-15)

## Description

The present invention relates to a method for controlling the application of an insecticide or pesticide on a surface, as well as to an insecticide or pesticide composition, which is appropriate for implementing this method.

The use of insecticide products in the home is necessary for the elimination and control of such damaging pests as cockroaches, ants, silverfish, etc. However, there is a concern that such products should not be applied in places where they could come in contact with humans or pets.

A common method of application is the aerosol, whereby a spray or mist is dispensed from a pressurised container. However, it is typical of these products that the spray cannot be easily controlled, and thus there is overspray which can go onto areas where the insecticide should not be. Further, since the liquid on the surface cannot be easily observed, it is very difficult to determine if the right amount of material is being applied. Too little product will be ineffective, and too much products are both wasteful and potentially harmful to the environment.

UK Patent Application GB 2187387 discloses an agricultural composition, which may be a pesticide or insecticide, for application to crops, soil or animals, where the agricultural activity of the composition varies with the pH of the water. In order to achieve the desired agricultural activity of the composition, the pH of the water must be adjusted in areas where the water is alkaline or is too acid. Typically, the pH of the water supply is measured, and a suitable quantity of adjuvant is added to the water to obtain the desired pH. A persistent pH indicator is used to determine when the agricultural composition has been mixed correctly so that the pH of the water mixture is in an acceptable range for the agricultural composition to have the proper activity. JP 55164601 decribes an insecticidal composition containing a pH indicator to be spread or coated. The presence of the composition can be detected by colour change upon applying an acide or base.

The purpose of this invention is to provide a method for controlling insect pests by the application of an insecticide product that is applied to surfaces commonly travelled by insect pests, and that the insecticide, when applied, is coloured, but after a certain period of time, the colour fades so that the presence of the insecticide is unobtrusive.

The advantage for the user is that the colour provides a visual guide to easily show where the product has been applied, thus enabling the user to control both the amount and placement of the insecticide. After application, the insecticide colour fades, and thus its presence becomes unobtrusive. Overspray is clearly revealed and the product may be cleaned from those areas where it is not intended.

If necessary, the insecticide applied can be revealed again, by simply remoistening the surfaces concerned, for example by spraying water thereon.

More particularly, a first object of the present invention is a method for controlling the application of an insecticide on a surface, which comprises the use of an insecticide composition including a pH indicator colorant in an aqueous medium changing to colourless after drying in the air on said surface, and the recoloration of the insecticide composition by remoistering selected areas of the surface to be checked.

A second object of the invention is an insecticide composition, which can be used to implement the above method, and which comprises at least one insect killing agent in aqueous solution, a coloured pH indicator which becomes colourless upon exposure to air and at least a compound for adjusting the pH of the composition to a pH at which the pH indicator is coloured.

As appropriate pH indicator, it can be mentioned for example 4-nitrophenol and phenolphthalein, and possibly 3-nitrophenol and thymolphthalein.

The 4-nitrophenol gives a yellow colour to the composition at a pH of about 7.0 and higher, whereas phenolphthalein necessitates a high pH value of at least 9.0 to be coloured (pink-red).

The level of the pH indicator is generally of 0.01 to 1.0 wt %, preferably of 0.05 to 0.5 wt %, so that the level is not too high resulting in a colour change time which is too long and may cause staining, and not too low resulting in an insufficiently intense colour.

The water content is comprised between about 25 and 85 wt %, depending on the presence or not of a propellant.

As insect killing agents, the known ones can be used, for example n-pyrethrins, malathion, boric acid, tetramethrin, esbiothrin, Etoc, neopynamineforte, deltamethrin, propoxur, cypermethrin, Gokilaht S, etc. Each of these agents is generally used at a level of 0.01 to 1.0 wt % according to their respective solubility and toxicity.

The present invention will now be illustrated more in details by the following example.

### Example :

The following aqueous insecticide was prepared and packaged under pressure together with a usual propellant (LPG) :

| Compounds | wt % |
|---|---|
| Natural Pyrethrins | 0.50 |
| Malathion | 1.00 |
| Piperonyl Butoxide | 0.20 |
| Boric Acid | 1.00 |
| Sodium Benzoate | 0.50 |
| Isopropyl Alcohol | 2.00 |
| Sorbitan Monooleate | 0.50 |
| 4-Nitrophenol | 0.10 |
| Water | 39.20 |
| Propellant (LPG) | 55.00 |
| TOTAL | 100.00 |

This composition of a pH of about 7.0 and of a yellow colour was applied by spraying to various kind of surfaces, such as wood, painted wood, painted walls, ceramic tile, plastic (polyethylene), glass and stainless steel.

After about 40 minutes of exposure to air (including carbon dioxide), the composition was dried and the yellow colour disappeared.

The insecticide activity was tested and found in agreement with the usual requirements of similar composition.

Other levels of 4-nitrophenol were tested, and it was shown that with 0.05 wt % the yellow colour was somewhat faint but with a shorter colour changing time (about 25 min.), whereas with highest content, i.e. 0.5 resp. 1.0 %, the colour change takes more time, i.e. 70 resp. 120 min.

Phenolphthalein was also tested at levels of 0.01 to 1.0 wt %, which all gave acceptable results and a colour change of about 40 min. The pH of the composition was initially adjusted to 9.4 using triethanolamine.

The method according to the present invention was then further experimented, in that areas of the surfaces treated by the insecticide composition were remoistened, for example by simply spraying tap water (pH ~7.5 - 8.5) thereon. It was thus confirmed that the remoistened areas become again yellow (respectively pink-red with phenolphthalein), so that it was possible to control the presence or the absence of the insecticide composition thereon.

## Claims

1. Method for controlling the application of an insecticide on a surface by providing a visual guide to show the application of the insectiside, the method comprising the use of an insecticide composition including a pH indicator colorant in an aqueous medium that changes to colourless after the applied insectiside has dried by exposure to air on said surface after about 40 minutes.

2. A method according to claim 1, comprising the additional step of recoloration of the insecticide composition by remoistering selected areas of the surface to be checked after the applied insecticide has dried.

3. A method according to claim 2, wherein the temporary colour indicator is a pH indicator.

4. Insecticide composition comprising at least one insect killing agent in aqueous solution, a coloured pH indicator which becomes colourless upon exposure to air for about 40 minutes so that the presence of the insecticide is unobtrusive and at least a compound for adjusting the pH of the composition to a pH at which the pH indicator is coloured.

5. Insecticide composition according to claim 4, in which the pH indicator is 3-nitrophenol, 4-nitrophenol, phenolphtalein or thymolphthalein.

6. Insecticide composition according to claim 4 or 5, in which the content of pH indicator is of 0.01 to 1.0 wt %, preferably from 0.05 to 0.5 wt %.

7. Insecticide composition according to one of claims 4 to 6, in which the insect killing agent is one or more of the following compounds:
n-pyrethrins, malathion, boric acid, tetramethrin, esbiothrin, Etoc, neopynamineforte, deltamethrin, propoxur, cypermethrin and Gokilaht S, each one being present at a level of 0.01 to 1.0 wt % according to their respective solubility and toxicity.

8. Insecticide composition according to claim 4, which is as follows :
| Compounds | wt % |
|---|---|
| Natural Pyrethrins | 0.50 |
| Malathion | 1.00 |
| Piperonyl Butoxide | 0.20 |
| Boric Acid | 1.00 |
| Sodium Benzoate | 0.50 |
| Isopropyl Alcohol | 2.00 |
| Sorbitan Monooleate | 0.50 |
| 4-Nitrophenol | 0.10 |
| Water | 39.20 |
| Propellant (LPG) | 55.00 |

## Patentansprüche

1. Verfahren zur Steuerung der Applikation eines Insektizids auf eine Oberfläche durch Bereitstellung einer visuellen Führung, um die Applikation des Insektizids anzuzeigen, wobei das Verfahren die Verwendung einer Insektizidzusammensetzung umfaßt, einschließlich eines pH-Indikatorfärbemittel in einem wäßrigen Medium, das sich zu farblos verändert, nachdem das aufgebrachte Insektizid getrocknet ist, durch Aussetzen an Luft auf der Oberfläche nach ungefähr 40 Minuten.

2. Verfahren gemäß Anspruch 1, umfassend den zusätzlichen Schritt der Wiederfärbung der Insektizidzusammensetzung durch neuerliche Anfeuchtung ausgewählter Bereiche der Oberfläche, die überprüft werden soll, nachdem das aufgebrachte Insektizid getrocknet ist.

3. Verfahren gemäß Anspruch 2, wobei der temporäre Farbindikator ein pH-Indikator ist.

4. Insektizidzusammensetzung, umfassend mindest ein insektentötendes Mittel in wäßriger Lösung, einen gefärbten pH-Indikator, der nach Aussetzung gegenüber Luft für ungefähr 40 Minuten farblos wird, so daß die Gegenwart des Insektizids nicht ins Auge fällt, und mindestens eine Verbindung zur Einstellung des pHs der Zusammensetzung auf einen pH, bei dem der pH-Indikator gefärbt ist.

5. Insektizidzusammensetzung gemäß Anspruch 4, worin der pH-Indikator 3-Nitrophenol, 4-Nitrophenol, Phenolphthalein oder Thymolphthalein ist.

6. Insektizidzusammensetzung gemäß Anspruch 4 oder 5, worin der Gehalt des pH-Indikators 0,01 bis 1,0 Gew.%, vorzugsweise 0,05 bis 0,5 Gew.% beträgt.

7. Insektizidzusammensetzung gemäß einem der Ansprüche 4 bis 6, worin das insektentötende Mittel eine oder mehr der folgenden Verbindungen ist: n-Pyrethrine, Malathion, Borsäure, Tetramethrin, Esbiothrin, Etoc, Neopynaminforte, Deltamethrin, Propoxur, Cypermethrin und Gokilaht S, wobei jedes in einer Menge von 0,01 bis 1,0 Gew.% gemäß seiner jeweiligen Löslichkeit und Toxizität vorliegt.

8. Insektizidzusammensetzung gemäß Anspruch 4, die wie folgt aufgebaut ist:
| Verbindungen | Gew.% |
|---|---|
| natürliche Pyrethrine | 0,50 |
| Malathion | 1,00 |
| Piperonylbutoxid | 0,20 |
| Borsäure | 1,00 |
| Natriumbenzoat | 0,50 |
| Isopropylalkohol | 2,00 |
| Sorbitanmonooleat | 0,50 |
| 4-Nitrophenol | 0,10 |
| Wasser | 39,20 |
| Treibmittel (LPG) | 55,00 |

## Revendications

1. Procédé de contrôle de l'application d'un insecticide sur une surface, en fournissant un guide visuel permettant de montrer l'application de l'insecticide, le procédé comprenant l'utilisation d'une composition d'insecticide qui comporte un colorant indicateur de pH dans un milieu aqueux qui devient incolore après que l'insecticide appliqué a séché par exposition à l'air sur ladite surface, après environ 40 minutes.

2. Procédé selon la revendication 1, comprenant l'étape supplémentaire consistant à recolorer la composition d'insecticide en ré-humidifiant des zones sélectionnées de la surface à vérifier après que l'insecticide appliqué a séché.

3. Procédé selon la revendication 2, dans lequel l'indicateur de couleur temporaire est un indicateur de pH.

4. Composition d'insecticide comprenant au moins un agent insecticide en solution aqueuse, un indicateur de pH coloré qui devient incolore après une exposition à l'air pendant environ 40 minutes, si bien que la présence de l'insecticide n'est pas visible, et au moins un composé permettant d'ajuster le pH de la composition à un pH auquel l'indicateur de pH est coloré.

5. Composition d'insecticide selon la revendication 4, dans laquelle l'indicateur de pH. est du 3-nitrophénol, du 4-nitrophénol, de la phénolphtaléine ou de la thymolphtaléine.

6. Composition d'insecticide selon la revendication 4 ou 5, dans laquelle la teneur en indicateur de pH est comprise entre 0,01 et 1,0 % en poids, de préférence entre 0,05 et 0,5 % en poids.

7. Composition d'insecticide selon l'une des revendications 4 à 6, dans laquelle l'agent insecticide est un composé parmi les suivants : n-pyréthrines, malathion, acide borique, tétraméthrine, esbiothrine, Étoc, néopynamine forte, deltaméthrine, propoxur, cyperméthrine, et Gokilaht S, chacun étant présent dans une quantité comprise entre 0,01 et 1,0 % en poids, en fonction de leur solubilité et toxicité respectives.

8. Composition d'insecticide selon la revendication 4, qui contient :
| Composés | % en poids |
|---|---|
| Pyréthrines naturelles | 0,50 |
| Malathion | 1,00 |
| Butoxyde de pipéronyle | 0,20 |
| Acide borique | 1,00 |
| Benzoate de sodium | 0,50 |
| Alcool d'isopropyle | 2,00 |
| Mono-oléate de sorbitane | 0,50 |
| 4-nitrophénol | 0,10 |
| Eau | 39,20 |
| Propulseur (GPL) | 55,00 |
